# EUROPÄISCHE PATENTSCHRIFT

(11) **EP 1 288 083 B1**
(45) Veröffentlichungstag und Bekanntmachung des Hinweises auf die Patenterteilung: **04.01.2006**
(21) Anmeldenummer: 02018417.2
(22) Anmeldetag: 16.08.2002
(51) Int. Cl.: B60R 21/20

(54) **Beifahrer-Airbag-Modul für ein Kraftfahrzeug**
Passenger airbag module for a vehicle
Module airbag passager pour véhicule

(30) Priorität: 31.08.2001 DE 10142596
(43) Veröffentlichungstag der Anmeldung: 05.03.2003
(73) Patentinhaber: ADAM OPEL AG, 65423 Rüsselsheim (DE)
(72) Erfinder: Rick, Ulrich, Dipl.-Ing., 55595 Roxheim (DE)

(56) Entgegenhaltungen:
- DE-A- 1 780 137
- DE-A- 19 957 578

## Beschreibung

Die Erfindung bezieht sich auf ein Beifahrer-Airbag-Modul für ein Kraftfahrzeug mit einem Gehäuse für einen aufblasbaren Gassack und einem Gasgenerator zur Erzeugung von Druckgas nach dem Oberbegriff des Patentanspruches 1.

Die DE 197 07 997 A1 offenbart ein Airbag-Modul mit einer mit einem Diffusor verbundenen Gasgeneratorkammer und einer Gassackkammer. Zum gerichteten Einleiten des von dem Gasgenerator erzeugten Druckgases in den Gassack sind Gasführungen vorgesehen, die zueinander beabstandet und im Wesentlichen V-förmig zueinander angeordnet sind.

Im Weiteren ist aus der gattungsbildenden DE 199 57 578 A1 eine aufblasbare Schutzvorrichtung für einen Insassen eines Kraftfahrzeuges bekannt, die zumindest einen in einem Gehäuse angeordneten und im Falle eines Unfalls aktivierbaren Gasgenerator sowie zumindest einen in Ruhelage gefalteten Luftsack umfasst. Zum gerichteten Einleiten der durch den Gasgenerator erzeugten Gase in den Luftsack ist zumindest eine rohrförmige Gasführung vorgesehen.

Darüber hinaus offenbart die DE 196 18 817 A1 ein Beifahrer-Airbag-Modul für ein Kraftfahrzeug, das unterhalb einer Instrumententafel auf einem Strukturquerträger befestigt ist. Zwischen einem Gehäuse des Beifahrer-Airbag-Moduls und der Instrumententafel sind verformungsenergieaufnehmende Elemente vorgesehen, die den Schusskanal bilden.

Die zuvor erläuterten Airbagsysteme weisen den gemeinsamen Nachteil auf, dass bei einer Auslösung des Airbagmoduls die seitliche, also radiale Entfaltung des Gassackes gestört ist. Dadurch wird die Entfaltung des Gassackes relativ inhomogen und in Richtung des Insassen gelenkt, weshalb die Airbagsysteme verhältnismäßig aggressiv gegenüber dem Insassen sind.

Es ist Aufgabe der Erfindung, ein Beifahrer-Airbag-Modul der eingangs genannten Art zu schaffen, mit dem eine hohe Sicherheit für einen Insassen, auch in einer Out Off Position (OOP) sichergestellt ist.

Erfindungsgemäß wird die Aufgabe durch die Merkmale des Patentanspruches 1 gelöst.

Der Verlauf der Strömungskanäle zum gerichteten Einleiten des Druckgases in den Gassack entspricht dem der längsseitigen Gehäusewände, die in einer Einbausituation des Beifahrer-Airbag-Moduls gegenüber einer horizontalen Mittelebene in einem bestimmten Winkel nach oben und unten gerichtet sind und sich somit trichterförmig öffnen. Diese Winkelstellung unterstützt die seitlich gerichtete Entfaltung des Gassackes beim Einströmen von Druckgas und verhindert das direkte Anschießen eines Insassen bei der Expansion. In Abhängigkeit von der Winkelstellung der Strömungskanäle sowie der Gehäusewände wird die Entfaltung des Gassackes aggressiver oder milder.

Bei einer Ausgestaltung der Erfindung ist mindestens an einer der stirnseitigen Gehäusewände der Gassackkammer zumindest ein Strömungskanal für das Druckgas ausgebildet. Die durchgehende trichterförmige Öffnung der Gehäusewände und die dazu korrespondierende Ausrichtung der Strömungskanäle hat eine homogene Entfaltung des Gassackes sowie einen hohen Insassenschutz zur Folge, da der Gassack in axialer Richtung, also in Richtung des Insassen mit einer relativ geringen und in radialer Richtung, also seitwärts mit einer relativ hohen Expansionsgeschwindigkeit aufgeblasen wird.

Erfindungsgemäß sind die entsprechenden Gehäusewände der Gassackkammer zur Bildung der Strömungskanäle doppelwandig gestaltet, wobei vorzugsweise ein Einblasmund des Gassackes die freien Enden der Gehäusewände abgedichtet einlagig übergreift und der Gassack in parallel zu den längsseitigen Gehäusewänden verlaufenden Falten gepackt ist. Somit sind zur Ausbildung der Strömungskanäle keine zusätzlichen Bauteile erforderlich und der seitlich ausgerichtete Eintritt des Druckgases in den Gassack ist mit einfachen Mitteln sichergestellt. Die Faltung des Gassackes in der Gassackkammer unterstützt die seitliche Entfaltung des Gassackes.

Weiterhin sind gemäß der Erfindung die doppelwandigen Gehäusewände durch Trennstege in mehrere Einzel-StrömungsKanäle unterteilt. Die Trennstege stabilisieren die doppelwandigen Gehäusewände und stellen die Strömungsrichtung des Druckgases sicher.

Vorzugsweise ist jedem der Einzel-Strömungskanäle mindestens eine Durchtrittsöffnung für das Druckgas aus der Diffusorkammer zugeordnet. Die Durchtrittsöffnungen gewährleisten das Einströmen des Druckgases in den Gassack in einer ausreichenden Menge und Geschwindigkeit.

Um Druckdifferenzen in der Diffusorkammer auszugleichen und gleichmäßige Druckverhältnisse im expandierenden Gassack zu erzeugen, weisen bevorzugt die Strömungskanäle und/oder die Einzel-Strömungskanäle und/oder die Durchtrittsöffnungen gleiche oder unterschiedliche Querschnitte auf. Somit kann die Gassackkinematik, die Entfaltungsgeschwindigkeit sowie die Entfaltungsrichtung des Gassackes gezielt beeinflusst und zur Systemabstimmung herangezogen werden.

Zur Durchmischung und zur Abkühlung des aus dem Gasgenerator austretenden Druckgases, ist zumindest unterhalb der Durchtrittsöffnungen ein Freiraum in der Diffusorkammer ausgebildet.

Es versteht sich, dass die vorstehend genannten und nachstehend noch zu erläuternden Merkmale nicht nur in der jeweils angegebenen Kombination, sondern auch in anderen Kombinationen verwendbar sind, ohne den Rahmen der vorliegenden Erfindung zu verlassen.

Die Erfindung wird im Folgenden anhand mehrerer Ausführungsbeispiele unter Bezugnahme auf die zugehörigen Zeichnungen näher erläutert. Es zeigen:
- Fig. 1: eine perspektivische Darstellung eines erfindungsgemäßen Beifahrer-Airbag-Moduls,
- Fig. 2: eine perspektivische Darstellung des Beifahrer-Airbag-Moduls in einer ersten alternativen Ausgestaltung,
- Fig. 3: einen Längsschnitt durch die Darstellung nach Fig. 2,
- Fig. 4: einen Längsschnitt durch die Darstellung nach Fig. 2 in einer ersten alternativen Ausgestaltung,
- Fig. 5: einen Längsschnitt durch die Darstellung nach Fig. 2 in einer zweiten alternativen Ausgestaltung,
- Fig. 6: eine perspektivische Darstellung des Beifahrer-Airbag-Moduls in einer zweiten alternativen Ausgestaltung,
- Fig. 7: einen Längsschnitt durch die Darstellung nach Fig. 6.

Ein Beifahrer-Airbag-Modul für ein Kraftfahrzeug umfasst ein Gehäuse 1 mit einer Diffusorkammer 2 zur Aufnahme eines rohrförmigen Gasgenerators 3 sowie eine Gassackkammer 4, in der ein Gassack 5 zusammengefaltet aufgenommen ist. Die Gassackkammer 4 ist trichterförmig ausgebildet und umfangsseitig durch Gehäusewände 6 begrenzt. Zwischen der Diffusorkammer 2 und der Gassackkammer 4 ist eine Zwischenwand 7 angeordnet.

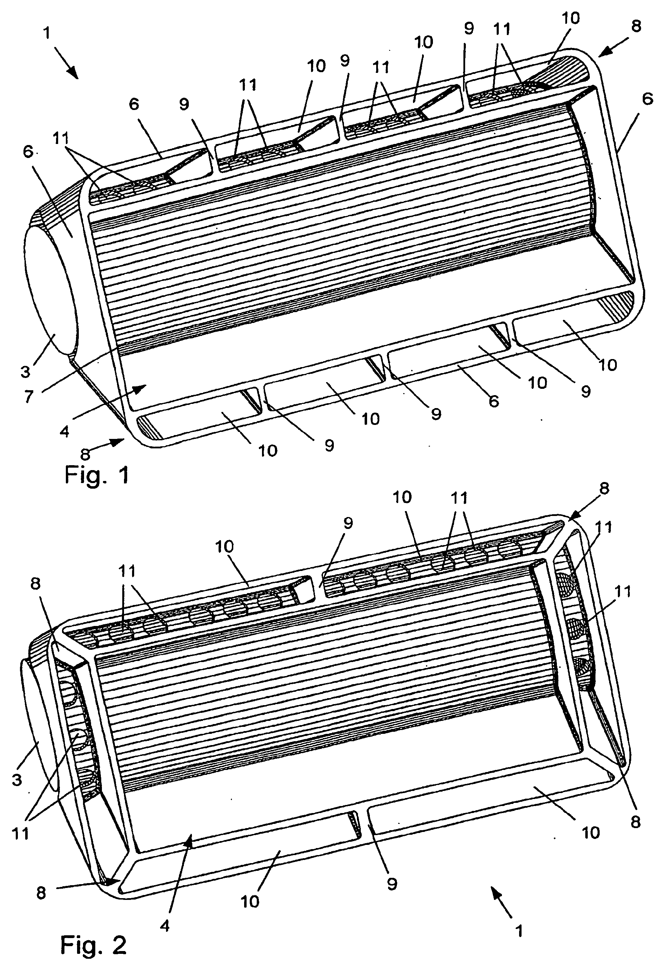

Nach Fig. 1 sind die längsseitigen Gehäusewände 6 zur Ausbildung von Strömungskanälen 8 doppelwandig ausgeführt. Jeder der Strömungskanäle 8 ist durch Trennstege 9 in Einzel-Strömungskanäle 10 unterteilt, wobei den Einzel-Strömungskanälen 10 jeweils mehrere zylindrische Durchtrittsöffnungen 11 in der Zwischenwand 7 zugeordnet sind. Die Strömungskanäle 8 sowie die Gehäusewände 6 öffnen sich ausgehend von der Zwischenwand 7 trichterförmig, so dass das aus der Diffusorkammer 2 durch die Strömungskanäle 8 in den Gassack 5 einströmende Druckgas in eine dementsprechende Richtung geleitet wird. Die nach außen gerichtete Winkelstellung der Strömungskanäle 8 bewirkt eine bevorzugte seitliche Entfaltung des Gassackes 5, wodurch ein Insasse nicht direkt von dem expandierenden Gassack 5 angeschossen wird.

Um die Aggressivität des Beifahrer-Airbag-Moduls bei der Expansion des Gassacks darüber hinaus abzumildern, weisen gemäß Fig. 2 neben den längsseitigen Gehäusewänden 6 auch die stirnseitigen Gehäusewände 6 Strömungskanäle 8 auf. Die Strömungskanäle 8 an den Stirnseiten der Gassackkammer 4 sind ebenfalls in dem von den doppelwandigen Gehäusewänden 6 gebildeten Freiraum ausgebildet und stehen über zylindrische Durchtrittsöffnungen 11 mit der Diffusorkammer 2 in Strömungsverbindung. Die stirnseitigen Strömungskanäle 8 sind aufgrund der trichterförmigen Ausrichtung der Gehäusewände 6 sowohl gegenüber einer horizontalen als auch einer vertikalen Mittelebene des Gehäuses 1 in ihrer Einbaulage nach außen gerichtet. Aufgrund der Ausrichtung der Strömungskanäle 8 wird der Gassack 5 bei einströmendem Druckgas primär in seitlicher Richtung, also nicht direkt zum Insassen hin entfaltet.

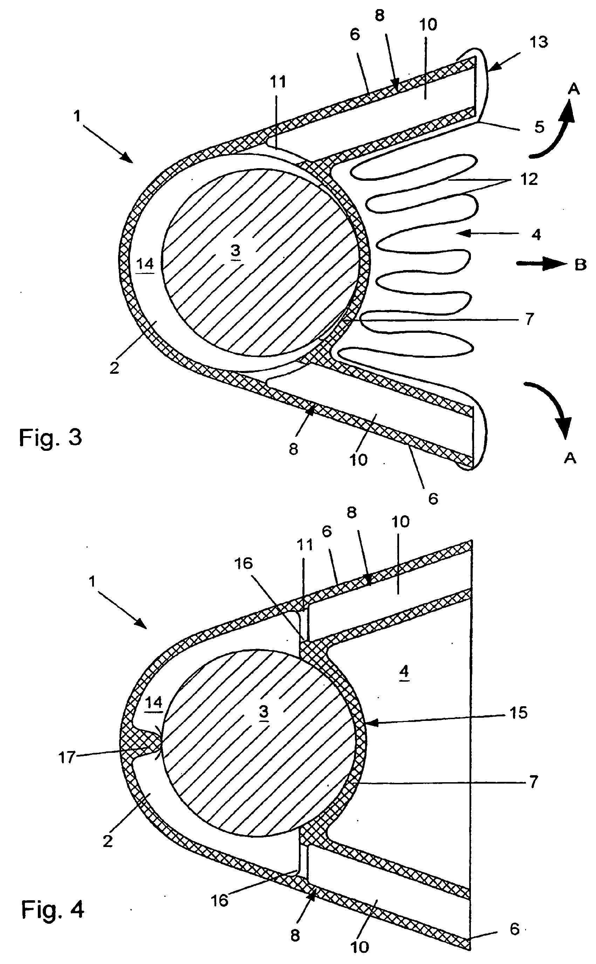

In Fig. 3 ist der Gassack 5 in der Gassackkammer 4 gefaltet, wobei die einzelnen Falten 12 im Wesentlichen parallel zu den längsseitigen Gehäusewänden 6 ausgerichtet sind. Ein Einblasmund 13 des Gassackes 5 übergreift abgedichtet einlagig die freien Enden der Gehäusewände 6. Die Diffusorkammer 2 und der Gasgenerator 3 weisen einen im Wesentlichen zylindrischen Querschnitt auf, wobei der Durchmesser des an der Zwischenwand 7 tangential anliegenden Gasgenerators 3 derart bemessen ist, dass ein sichelförmiger Freiraum 14 in der Diffusorkammer 2 ausgebildet ist.

Bei dem Gehäuse 1 nach Fig. 4 weist die Zwischenwand 7 eine Wölbung 15 auf, deren Radius dem Radius des Gasgenerators 3 entspricht. Beidseitig zur Wölbung 15 der Zwischenwand 7 sind Stege 16 mit den Durchtrittsöffnungen 11 zur Verbindung mit der U-förmigen Diffusorkammer 2 ausgebildet. Der im Querschnitt im Wesentlichen U-förmige Freiraum 14 in der Diffusorkammer 2 ist durch einen Haltesteg 17 im Scheitelpunkt der Diffusorkammer 2 unterbrochen, wobei der Haltesteg 17 mit seinem freien Ende an dem Gasgenerator 3 anliegt und diesen gegen die Zwischenwand 7 hält.

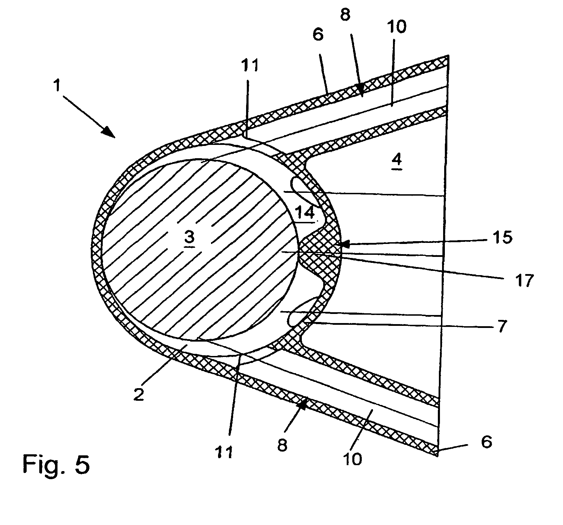

Gemäß Fig. 5 sind die Diffusorkammer 2 und der Gasgenerator 3 im Querschnitt im Wesentlichen zylindrisch ausgebildet, wobei der Haltesteg 17 in der Mitte der Zwischenwand 7 angeordnet ist, so dass der Gasgenerator 3 an der dem Haltesteg 17 gegenüberliegenden Wandung der Diffusorkammer 2 anliegt und ein im Querschnitt sichelförmiger Freiraum 14 in der Diffusorkammer 2 ausgebildet ist. Die längsseitigen Strömungskanäle 8 gehen tangential von der Diffusorkammer 2 ab.

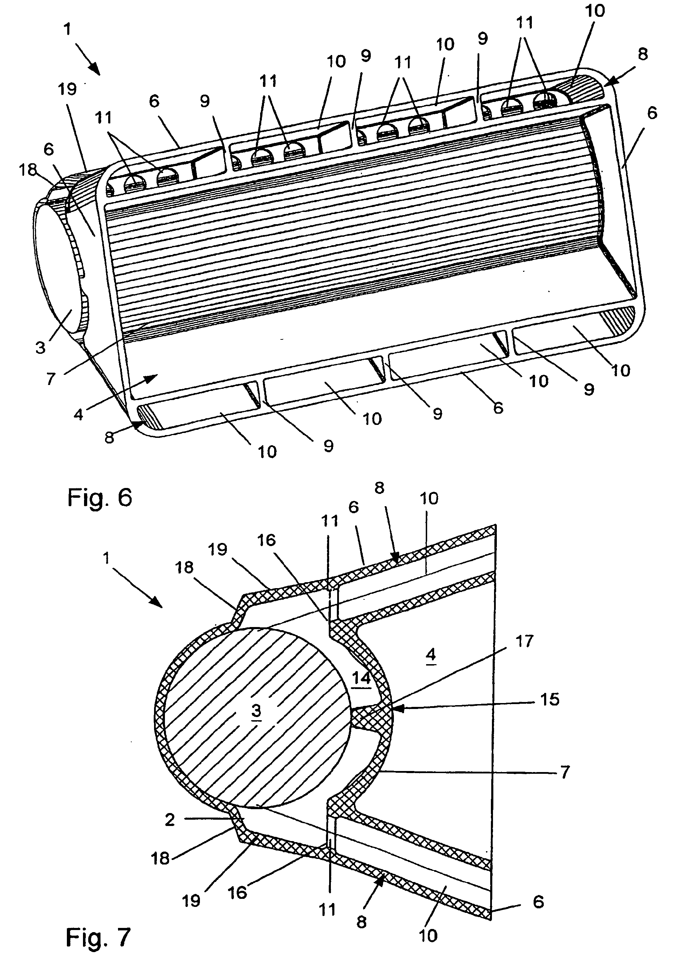

Nach Fig. 7 ist die Diffusorkammer 2 bereichsweise mit einem zu dem Radius des Gasgenerators 3 korrespondierenden Radius versehen, in dem der Gasgenerator 3 durch den an der die Wölbung 15 aufweisenden Zwischenwand 7 angeformten Haltesteg 17 gehalten wird. Der Radius der Diffusorkammer 2 mündet zur Erweiterung der Diffusorkammer 2 in gegenüberliegende Flansche 18, die in die längsseitigen Gehäusewände 6 verlängernde Abschnitte 19 übergehen, wobei die sich an die Wölbung 15 der Zwischenwand 7 anschließenden Stege 16 die Durchtrittsöffnungen 11 aufweisen und im Anbindungsbereich der Abschnitte 19 mit den längsseitigen Gehäusewänden 6 an denselben angeformt sind.

### Bezugszeichenliste

- 1.: Gehäuse
- 2.: Diffusorkammer
- 3.: Gasgenerator
- 4.: Gassackkammer
- 5.: Gassack
- 6.: Gehäusewand
- 7.: Zwischenwand
- 8.: Strömungskanal
- 9.: Trennsteg
- 10.: Einzel-Strömungskanal
- 11.: Durchtrittsöffnung
- 12.: Falte
- 13.: Einblasmund
- 14.: Freiraum
- 15.: Wölbung
- 16.: Steg
- 17.: Haltesteg
- 18.: Flansch
- 19.: Abschnitt

- A: Pfeil
- B: Pfeil

## Patentansprüche

1. Beifahrer-Airbag-Modul für ein Kraftfahrzeug mit einem Gehäuse (1) für einen aufblasbaren Gassack (5) und einem Gasgenerator (3) zur Erzeugung von Druckgas, wobei das Gehäuse (1) eine Diffusorkammer (2) für den Gasgenerator (3) und eine sich trichterförmig erweiternde Gassackkammer (4) aufweist und zur bevorzugten Entfaltung des Gassacks (5) in seitlicher Richtung (Pfeil A) mindestens an einer der längsseitigen Gehäusewände (6) der Gassackkammer (4) zumindest ein mit der Diffusorkammer (2) verbundener Strömungskanal (8) für das Druckgas ausgebildet ist, **dadurch gekennzeichnet, dass** die Gehäusewände (6) der Gassackkammer (4) zur Bildung der Strömungskanäle (8) doppelwandig gestaltet und durch Trennstege (9) in mehrere Einzel-Strömungskanäle (10) unterteilt sind.

2. Beifahrer-Airbag-Modul nach Anspruch 1, **dadurch gekennzeichnet, dass** zumindest an einer der stirnseitigen Gehäusewände (6) der Gassackkammer (4) zumindest ein Strömungskanal (8) für das Druckgas ausgebildet ist.

3. Beifahrer-Airbag-Modul nach Anspruch 1 oder 2, **dadurch gekennzeichnet, dass** ein Einblasmund (13) des Gassackes (5) die freien Enden der Gehäusewände (6) abgedichtet einlagig übergreift und der Gassack (5) in parallel zu den längsseitigen Gehäusewänden (6) verlaufenden Falten (12) gepackt ist.

4. Beifahrer-Airbag-Modul nach einem der Ansprüche 1 bis 3, **dadurch gekennzeichnet, dass** jedem der Einzel-Strömungskanäle (10) mindestens eine Durchtrittsöffnung (11) für das Druckgas aus der Diffusorkammer (2) zugeordnet ist.

5. Beifahrer-Airbag-Modul nach einem der Ansprüche 1 bis 4, **dadurch gekennzeichnet, dass** die Strömungskanäle (8) und/oder die Einzel-Strömungskanäle (10) und/oder die Durchtrittsöffnungen (11) gleiche oder unterschiedliche Querschnitte aufweisen.

6. Beifahrer-Airbag-Modul nach einem der Ansprüche 1 bis 5, **dadurch gekennzeichnet, dass** zumindest unterhalb der Durchtrittsöffnungen (11) ein Freiraum in der Diffusorkammer (2) ausgebildet ist.

7. Beifahrer-Airbag-Modul nach einem der Ansprüche 1 bis 6, **dadurch gekennzeichnet, dass** die Gassackkammer (4) durch die Gehäusewände (6) bzw. die Strömungskanäle (8) und die Zwischenwand (7) gebildet ist.

8. Beifahrer-Airbag-Modul nach einem der Ansprüche 1 bis 7, **dadurch gekennzeichnet, dass** der Gassack (5) die freien Enden der Strömungskanäle (8) nur einlagig überspannt.

## Claims

1. Passenger airbag module for a motor vehicle having a housing (1) for an inflatable airbag (5) and having a gas generator (3) for generating pressure gas, wherein the housing (1) has a diffuser chamber (2) for the gas generator (3) and an airbag chamber (4) widening in a funnel-shaped manner and for the preferred deployment of the airbag (5) in lateral direction (arrow A) at least one flow channel (8) for the pressure gas that is connected to the diffuser chamber (2) is formed at least at one of the longitudinal-side housing walls (6) of the airbag chamber (4), **characterized in that** the housing walls (6) of the airbag chamber (4) are of a double-walled design to form the flow channels (8) and are subdivided by dividing webs (9) into a plurality of individual flow channels (10).

2. Passenger airbag module according to claim 1, **characterized in that** at least one flow channel (8) for the pressure gas is formed at least at one of the front housing walls (6) of the airbag chamber (4).

3. Passenger airbag module according to claim 1 or 2, **characterized in that** an air inlet mouth (13) of the airbag (5) with a single layer overlaps the free ends of the housing walls (6) in a sealed manner and the airbag (5) is packed in folds (12) extending parallel to the longitudinal-side housing walls (6).

4. Passenger airbag module according to one of claims 1 to 3, **characterized in that** at least one through-opening (11) for the pressure gas from the diffuser chamber (2) is associated with each of the individual flow channels (10).

5. Passenger airbag module according to one of claims 1 to 4, **characterized in that** the flow channels (8) and/or the individual flow channels (10) and/or the through-openings (11) have the same or different cross sections.

6. Passenger airbag module according to one of claims 1 to 5, **characterized in that** a free space in the diffuser chamber (2) is formed at least below the through-openings (11).

7. Passenger airbag module according to one of claims 1 to 6, **characterized in that** the airbag chamber (4) is formed by the housing walls (6) and/or the flow channels (8) and the partition wall (7).

8. Passenger airbag module according to one of claims 1 to 7, **characterized in that** the airbag (5) overlaps the free ends of the flow channels (8) only with a single layer.

## Revendications

1. Module de sac gonflable (airbag) pour passager, pour un véhicule automobile, comprenant un boîtier (1) pour un sac à gaz (5) gonflable et un générateur de gaz (3) pour générer du gaz sous pression, le boîtier (1) présentant une chambre de diffuseur (2), pour le générateur de gaz (3), et une chambre pour sac à gaz (4), allant en s'élargissant en forme d'entonnoir, et au moins un canal d'écoulement (8), relié à la chambre de diffuseur (2) pour le gaz sous pression, étant réalisé pour obtenir un déploiement préférentiel du sac à gaz (5) en direction latérale (flèche A) au moins sur une paroi de boîtier (6), située du côté longitudinal, de la chambre pour sac à gaz (4), **caractérisé en ce que** les parois de boîtier (6) de la chambre pour sac à gaz (4) sont à paroi double pour former les canaux d'écoulement (8) et sont subdivisées en plusieurs canaux d'écoulement individuels (10) par des nervures de séparation (9).

2. Module de sac gonflable (airbag) pour passager selon la revendication 1, **caractérisé en ce qu'**au moins sur l'une des parois de boîtier (6), située du côté frontal, de la chambre pour sac à gaz (4) est réalisé au moins un canal d'écoulement (8) pour le gaz sous pression.

3. Module de sac gonflable (airbag) pour passager selon la revendication 1 ou 2, **caractérisé en ce qu'**une embouchure d'insufflation (13) du sac à gaz (5) entoure sur une couche, de façon étanche, les deux extrémités des parois de boîtier (6) et le sac à gaz (5) est emballé en plis (12) s'étendant parallèlement aux parois de boîtier (6) situées du côté longitudinal.

4. Module de sac gonflable (airbag) pour passager selon l'une des revendications 1 à 3, **caractérisé en ce que**, à chacun des canaux d'écoulement individuels (10), est associée au moins une ouverture de passage (11) pour le gaz sous pression sortant de la chambre de diffuseur (2).

5. Module de sac gonflable (airbag) pour passager selon l'une des revendications 1 à 4, **caractérisé en ce que** les canaux d'écoulement (8) et/ou les canaux d'écoulement individuels (10) et/ou les ouvertures de passage (11) présentent des sections transversales identiques ou différentes.

6. Module de sac gonflable (airbag) pour passager selon l'une des revendications 1 à 5, **caractérisé en ce qu'**au moins au-dessous des ouvertures de passage (11) est formé un espace libre dans la chambre de diffuseur (2).

7. Module de sac gonflable (airbag) pour passager selon l'une des revendications 1 à 6, **caractérisé en ce que** la chambre pour sac à gaz (4) est formée par les parois de boîtier (6), respectivement les canaux d'écoulement (8) et la paroi intermédiaire (7).

8. Module de sac gonflable (airbag) pour passager selon l'une des revendications 1 à 7, **caractérisé en ce que** le sac à gaz (5) entoure uniquement sur une couche les extrémités libre des canaux d'écoulement (8).
